# EUROPEAN PATENT SPECIFICATION

(11) **EP 3 665 655 B1**
(45) Date of publication and mention of the grant of the patent: **19.02.2025**
(21) Application number: 18743822.1
(22) Date of filing: 27.07.2018
(51) Int. Cl.: G06T 15/08, G06T 19/20, G06T 7/11

(54) **VOLUME RENDERING OF VOLUMETRIC IMAGE DATA WITH INTERACTIVE SEGMENTATION**
VOLUMETRISCHE DARSTELLUNG VON VOLUMETRISCHEN BILDDATEN MIT INTERAKTIVER SEGMENTIERUNG
LE RENDU DU VOLUME DE DONNÉES D'IMAGE VOLUMÉTRIQUES AVEC SEGMENTATION INTERACTIVE

(30) Priority: 07.08.2017 EP 17185118
(43) Date of publication of application: 17.06.2020
(73) Proprietor: Koninklijke Philips N.V., 5656 AG Eindhoven (NL)
(72) Inventor: GROTH, Alexandra, 5656 AE Eindhoven (NL); PETERS, Jochen, 5656 AE Eindhoven (NL); WEESE, Rolf, Jürgen, 5656 AE Eindhoven (NL)
(74) Representative: Philips Intellectual Property & Standards
(86) International application number: PCT/EP2018/070369
(87) International publication number: WO 2019/030012

(56) References cited:
- EP-A2- 2 312 534
- ANONYMOUS: "Medical Imaging Interaction Toolkit: The Segmentation Plugin", 1 November 2016 (2016-11-01), Heidelberg, pages 1 - 6, XP055438698, Retrieved from the Internet <URL:http://docs.mitk.org/2016.11/org_mitk_views_segmentation.html> [retrieved on 20180108]
- ANTHONY SHERBONDY ET AL: "Fast Volume Segmentation With Simultaneous Visualization Using Programmable Graphics Hardware", PROC. OF THE 14TH IEEE VISUALIZATION CONFERENCE (VIS'03), 19. - 24.10.2003, SEATTLE, WA, USA, 22 October 2003 (2003-10-22), pages 171 - 176, XP058328516, ISBN: 978-0-7695-2030-8, DOI: 10.1109/VISUAL.2003.1250369
- ANONYMOUS: "Algorithms for Image Analysis 2D Segmentation (part II) Deformable Models", LECTURE NOTES FOR THE COURSE CS 4487/9587, 23 December 2010 (2010-12-23), XP055439686, Retrieved from the Internet <URL:http://www.csd.uwo.ca/courses/CS4487a/Lectures/lec05_snakes.pdf> [retrieved on 20180110]

## Description

### FIELD OF THE INVENTION

The invention relates to a system and a computer-implemented method for volume rendering of volumetric image data. The invention further relates to a workstation and imaging apparatus comprising the system, and to a computer-readable medium comprising instructions for causing a processor system to perform the computer-implemented method.

### BACKGROUND OF THE INVENTION

Medical image acquisition techniques such as Computed Tomography (CT), Magnetic Resonance (MR), etc., may acquire volumetric image data of an anatomical region of a patient. Here, the term 'volumetric image data' refers to image data which represents an image volume. Such volumetric image data may provide a three-dimensional (3D) view of an anatomical region or structure of the patient, and may thereby support medical diagnosis and treatment of the patient.

The volumetric image data may be presented in various ways to a user. For example, if the volumetric image data is represented by a stack of image slices, one of the image slices may be selected for display. Another example is that an oblique slice may be generated using a multi-planar reformatting technique.

Yet another example is that a volume rendering technique be used to generate a two-dimensional (2D) view of the volumetric image data. Several volume rendering techniques are known in the art, which may generally involve assigning opacity values to the image data and projecting the image data onto a viewing plane using the opacity values. The output of volume rendering is typically a 2D image.

It is known to use segmentation to delineate a sub-volume of the image volume and generate a volume rendering of the image data inside the sub-volume. This may allow a specific anatomical region or structure to be visualized.

A publication titled 'Fast Volume Segmentation With Simultaneous Visualization Using Programmable Graphics Hardware' by Sherbondy et al. describes a fast segmentation method which is based on seeded region growing with merging criteria based on intensity and gradient values and with gradient sensitivity scaled using nonlinear diffusion. The segmentation algorithm which is used is said to allow interactive visualization and control because of its computation speed and coordination with a hardware accelerated volume renderer.

It is further said that a user may interactively change parameters of the segmentation algorithm and run the segmentation algorithm again.

EP2312534 describes a device which allows a range of volume rendering to be limited using a three-dimensional region of interest (3D-ROI).

The manual of the segmentation plugin of the Medical Imaging Interaction Toolkit (MITK) as consulted via http://docs.mitk.orq/2016.11/orq mitk views segmentation.html#org mitk qui qt segmenta tionUserManualOverview, describes a segmentation plugin which allows creating segmentations of anatomical and pathological structures in medical images of the human body. Using a correction tool, small corrective changes may be applied to the segmentation, specifically by drawing lines.

Disadvantageously, the known measures such as those described by Sherbondy et al. do not allow a user to easily adjust the sub-volume which is volume rendered.

"Medical Imaging Interaction Toolkit: The Segmentation Plugin", 1 November 2016, pages 1-6, Heidelberg discloses a segmentation plugin to create segmentations of anatomical and pathological structures in medical image of the human body.

EP 2312534 discloses an ultrasonic volume data processing device which forms a three-dimensional image of a target tissue in a living body.

### SUMMARY OF THE INVENTION

It would be advantageous to obtain a system and method which allows a user to more easily adjust the sub-volume which is volume rendered.

In accordance with a first aspect of the invention, a system is provided for volume rendering of image data of an image volume showing a type of anatomical structure, the system comprising:
an image data interface configured to access the image data of the image volume;
   - a user input interface configured to receive user input data from a user input device operable by a user;
   - a display output interface configured to provide display data to a display to visualize output of the system;
   - a memory comprising instruction data representing a set of instructions;
   - a processor configured to communicate with the image data interface, the user input interface, the display output interface and the memory and to execute the set of instructions, wherein the set of instructions, when executed by the processor, cause the processor to:
      - access model data defining a segmentation model for segmenting the type of anatomical structure
      - apply the segmentation model to the image data of the image volume, thereby delineating a sub-volume of the image volume representing a segmentation of the anatomical structure in the image volume;
      - generate the display data to show a viewport which comprises a volume rendering of image data inside the sub-volume onto a viewing plane;
      - using the user input interface and the display output interface, establish a user interface which enables the user to
         interactively adjust a geometry of the viewing plane of the volume rendering to establish a user-selected viewing plane;
         interactively adjust the sub-volume by applying at least one of: a push action and a pull action to the sub-volume, wherein the push action causes a part of the sub-volume to be pulled inwards, wherein the pull action causes the part of the sub-volume to be pulled outwards, and wherein the part of the sub-volume to which the push action or the pull action is applied is selected by the processor based on the geometry of the user-selected viewing plane,
         wherein the volume rendering of the sub-volume is updated in the viewport in response to an adjustment of the viewing plane or the sub-volume by the user.

A further aspect of the invention provides a workstation or imaging apparatus comprising the system.

A further aspect of the invention provides a computer-implemented method for volume rendering of image data of an image volume showing a type of anatomical structure, the method comprising:
- accessing the image data of the image volume;
- accessing model data defining a segmentation model for segmenting the type of anatomical structure;
- applying the segmentation model to the image data of the image volume, thereby delineating a sub-volume of the image volume representing a segmentation of the anatomical structure in the image volume;
- generating display data showing a viewport which comprises a volume rendering of image data inside the sub-volume onto a viewing plane;
- establishing a user interface which enables the user to:
   interactively adjust a geometry of the viewing plane of the volume rendering to establish a user-selected viewing plane;
   interactively adjust the sub-volume by applying at least one of: a push action and a pull action to the sub-volume, wherein the push action causes a part of the sub-volume to be pulled inwards, and wherein the pull action causes the part of the sub-volume to be pulled outwards, wherein the part of the sub-volume to which the push action or the pull action is applied is selected by the processor based on the geometry of the user-selected viewing plane; and
- updating the volume rendering of the sub-volume in the viewport in response to an adjustment of the viewing plane or the sub-volume by the user.

A further aspect of the invention provides a computer-readable medium comprising transitory or non-transitory data representing instructions arranged to cause a processor system to perform the computer-implemented method.

The above measures provide an image data interface configured for accessing volumetric image data which may be acquired by various imaging modalities, including but not limited to CT and MRI, positron emission tomography, SPECT scanning, ultrasonography, etc. The volumetric image data may directly formatted as an image volume, e.g., as a 3D array of voxels, but also formatted differently yet represent an image volume. An example of the latter is a set of 2D images, such as image slices, which together represent the image volume.

The above measures further provide a user input interface for receiving user input commands from a user input device operable by the user. In particular, the user may use the user input device, e.g., a computer mouse, keyboard or touch screen, to provide input commands to the system and to control various operational aspects of the system, such as the user interface established by the system. Furthermore, a display output interface is provided which may, during use of the system, be connected to a display to display visual output of the system.

A processor is provided which is configurable by instructions stored in a memory to apply a segmentation model to the image data. Such a segmentation model, which may be defined by model data, may be configured to segment a type of anatomical region or structure. Effectively, the processor may perform a model-based segmentation of the image data by applying the segmentation model to the image data. For that purpose, the instructions stored in the memory may define an adaptation technique. It is noted that the functionality described in this paragraph is known per se from the field of model-based segmentation of medical images.

By applying a segmentation model to the image data, a sub-volume of the image volume may be delineated which normally corresponds to the type of anatomical region or structure represented by the segmentation model. For example, the interior of the ribcage may be segmented including the heart. The image data inside the sub-volume is then volume rendered onto a viewing plane, e.g., using any suitable known type of volume rendering technique, thereby obtaining an output image which represents the volume rendering of the image data inside the sub-volume. This volume rendering of the image data inside the sub-volume is henceforth also simply referred to as 'volume rendering of the sub-volume' or in short 'rendered sub-volume'. The viewing plane may be a geometric construct and may be defined in relation to the image volume, e.g., by plane coordinates.

Display data is then generated which, when displayed on a display, shows the rendered sub-volume in a viewport. For example, the viewport may be shown in a window of a graphical user interface, or in full-screen. The user may interactively adjust a geometry of the viewing plane, for example by adjusting a position or orientation of the viewing plane within the image volume, thereby effectively navigating within the image volume and obtaining volume renderings from different perspectives of the sub-volume. Such type of navigation is known per se.

The inventors have considered that in many medical applications, a (clinical) user may be mainly interested in the volume rendering of the sub-volume, in which case the segmentation model is merely a 'means to an end' to select the sub-volume which is to be volume rendered. However, the segmentation may be imperfect, which may, even for small errors, greatly affect the volume rendering.

It is known to allow a user to manually adjust a segmentation obtained from a segmentation model. For example, in case the segmentation model is a mesh model, a mesh part may be re-positioned, or the resolution of a mesh part may be increased. Such techniques are described in, e.g., WO2017001476, in as far as describing the segmentation of a sub-volume by a segmentation model. For adjusting an applied segmentation model, and thereby the segmented sub-volume, WO2017001476 generates a cross-sectional view of the image data which is optimized to allow adjustment of the mesh part. Such a cross-sectional view may be generated by multi-planar reformatting.

However, when the user is mainly interested in the volume rendering of the sub-volume and thus considers the segmentation model a 'means to an end' or even is not aware of the system internally using a segmentation model to select the sub-volume, it may not be desirable to adjust the segmentation model in a purposefully generated cross-sectional view as described in WO2017001476.

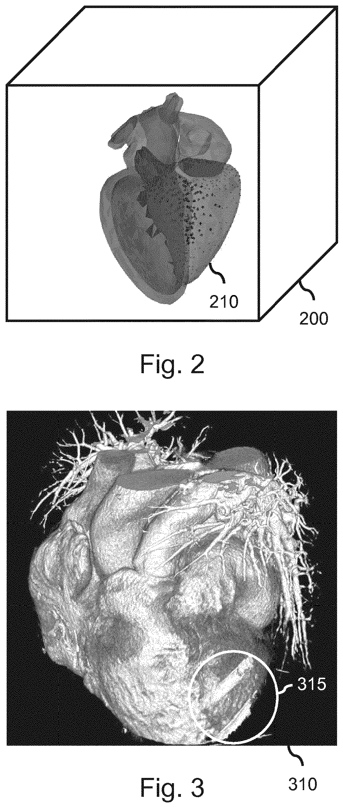

Not only may such a cross-sectional view distract the user from the volume rendering of the sub-volume, but it may also be difficult to judge how an adjustment of the segmentation model in the cross-sectional view affects the volume rendering. For example, Fig. 3 shows a thin bone layer 315 obstructing the heart, which may be the result of the segmentation of the interior of the rib cage being slightly inaccurate, e.g., in the sub-mm range. It may be difficult or even impossible to judge from a cross-sectional view whether or not the volume rendering of the sub-volume contains such types of obstructions or similar types of artifacts.

Sherbondy et al. does show the impact of changes in the segmentation on the volume rendering, but only allows changes in the form of adjustments in segmentation parameters, after which the segmentation algorithm has to be run again. Depending on the type of segmentation parameters which may be adjusted, it may be difficult or even impossible to apply specific adjustments to the segmentation.

To address these problems, the inventors have devised to establish a user interface which enables the user to interactively adjust the sub-volume by applying a push action and/or a pull action to the sub-volume, while updating the volume rendering of the sub-volume in response to an adjustment of the sub-volume by the user. Here, a push action causes a part of the sub-volume to be pulled inwards, and a pull action causes the part of the sub-volume to be pulled outwards. Effectively, the user is enabled to directly adjust the sub-volume by pushing a part of the sub-volume inwards, and/or pulling a part of the sub-volume outwards. The part to which the push and/or pull action is applied may be automatically selected based on the geometry of the viewing plane, as the geometry (e.g., the position and/or orientation with respect to the image volume) is user-adjustable and it is likely that the user, when invoking the push and/or pull action, wishes said action to be applied to a part of the sub-volume which is currently visible, or at least that the adjustment of said sub-volume is visible at the current geometry. For example, the action may be automatically applied to a centrally shown part of the sub-volume. The part to which the push and/or pull action is to be applied is thus automatically selected and may not require explicit user interaction, while being intuitively understandable by the user. As the volume rendering is directly updated after such an adjustment, the user can immediately see how the adjustment affects the volume rendering. It is thus not needed to perform an adjustment in a separate cross-sectional view, nor is the adjustment restricted to segmentation parameters of a segmentation algorithm, e.g., thresholds or sensitivity parameters, which may often be global rather than local.

Optionally, the push action or the pull action is selected and applied by the user based on at least one of: a keyboard command and a predefined mouse interaction. Such type of user input is immediate and allows the user to quickly and intuitively activate the push action and/or pull action (in short push/pull action).

Optionally, the part of the sub-volume to which the push action or the pull action is applied is selected by the processor based on at least one of:
- a point of the sub-volume which is shown in a center of viewport,
- a point of the sub-volume which is closest to the viewing plane of the user-selected volume rendering.

The push/pull action may be applied locally to the segmentation model, e.g., centered around or otherwise positioned relative to a point of the sub-volume. The center of the viewport, or the point closest to the viewing plane, may be automatically selected and does not require explicit user interaction, while being intuitively understandable by the user. Such and other points of the sub-volume may be determined based on the geometry of the user-selected viewing plane.

Optionally, the user interface comprises a manual selection mode in which the part of the sub-volume to which the push action or the pull action is applied is selected by the processor based on a user selection of a point of the sub-volume. Additionally or alternatively to the selection by the processor, the user may manually select a point of the sub-volume, e.g., by clicking in the viewport.

Optionally, the user interface enables the user to select at least one of: a spatial extent and a strength, of the push action or the pull action. The push/pull action may be applied locally within a spatial area, e.g., around the selected point, and have a strength which determines the degree of push/pull deformation. This extent and strength may be selectable by the user, either explicitly, e.g., by specifying said parameters in the user interface, or implicitly, e.g., based on a characteristic of the user input which actives the push/pull action. For example, if the push/pull action is activated by dragging, the distance may determine the strength.

Optionally, the user interface comprises a side adjustment mode in which the pull action and the push action operate in a plane parallel to the user-selected viewing plane of the volume rendering, and wherein, when the side adjustment mode is selected, an outline of a lateral side of the sub-volume is visualized in the viewport. A side adjustment mode may be provided which, when active, may provide the user with a visual aid in the form of a cross-sectional outline of the sub-volume to aid the user when adjusting the sub-volume laterally, e.g., along a plane parallel to the user-selected viewing plane. Such a visual aid has been found to be unobtrusive for this type of adjustment, as it does not obstruct the lateral sides of the rendered sub-volume.

Optionally, when the side adjustment mode is selected, image data surrounding the sub-volume in the image volume is volume rendered and displayed in the viewport in accordance with a different visualization parameter than the image data inside of the sub-volume. In addition to showing the outline, another visual aid may be provided when adjusting the sub-volume laterally, namely in the form of the volume rendering of image data immediately outside the sub-volume being displayed. This allows the user to quickly see the effect of when the sub-volume is enlarged by a pull-action. To nevertheless clearly show the boundaries of the sub-volume, the surrounding image data may be differently visualized, e.g., with a higher opacity or lower intensity. For other types of adjustments, such a visual aid may again rather obstruct, or be obstructed by, the rendered sub-volume.

Optionally, the user interface comprises a frontal adjustment mode in which the pull action and the push action operate in a plane orthogonal to the user-selected viewing plane of the volume rendering. In this mode, the user may be enabled to adjust a frontal side of the sub-volume, e.g., a side facing towards the user.

Optionally, when the frontal adjustment mode is selected, image data surrounding the sub-volume in the image volume is excluded from the volume rendering or assigned a 100% opacity in the volume rendering.

Optionally, the segmentation model is a mesh model. Such mesh models are well-suited for segmenting an anatomical region or structure.

Optionally, the segmentation model defines a closed hull. Such a closed hull may be directly used to select the sub-volume.

It will be appreciated by those skilled in the art that two or more of the above-mentioned embodiments, implementations, and/or optional aspects of the invention may be combined in any way deemed useful.

Modifications and variations of the workstation, the imaging apparatus, the method and/or the computer program product, which correspond to the described modifications and variations of the system, can be carried out by a person skilled in the art on the basis of the present description.

A person skilled in the art will appreciate that the system and method may be applied to image data acquired by various acquisition modalities such as, but not limited to, standard X-ray Imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM).

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a system for volume rendering of image data of an image volume, to which a display and a user input device is connected;
Fig. 2 shows an image volume and a segmentation model which delineates a sub-volume in the image volume;
Fig. 3 shows an example of a volume rendering of the image data inside a sub-volume, in which example the sub-volume includes a thin bone layer, thereby causing part of the heart to be obstructed in the volume rendering;
Fig. 4 shows a viewport comprising a rendered sub-volume, illustrating a push action and a pull action in a frontal adjustment mode of the user interface;
Fig. 5A illustrates in a cross-sectional view of the segmentation model how the adjustment by a pull action locally deforms the segmentation model;
Fig. 5B illustrates in the cross-sectional view of the segmentation model how the adjustment by a push action locally deforms the segmentation model;
Fig. 6 shows a viewport comprising a rendered sub-volume, illustrating a pull action in a side adjustment mode of the user interface;
Fig. 7 shows a block-diagram of a computer-implemented method for volume rendering of image data of an image volume; and
Fig. 8 shows a computer-readable medium comprising instructions.

It should be noted that the figures are purely diagrammatic and not drawn to scale. In the figures, elements which correspond to elements already described may have the same reference numerals.

### List of reference numbers

The following list of reference numbers is provided for facilitating the interpretation of the drawings and shall not be construed as limiting the claims.
- 020: image data repository
- 022: data communication
- 030: image data
- 060: display
- 062: display data
- 080: user input device
- 082: user input data

- 100: system for volume rendering
- 120: image data interface
- 122: internal data communication
- 140: processor
- 142: internal data communication
- 144: internal data communication
- 160: memory
- 180: user interface subsystem
- 182: display output interface
- 184: user input interface

- 200: image volume
- 210: sub-volume delineated by segmentation model
- 220, 222: cross-sectional view of segmentation model
- 230: surface of sub-volume in cross-sectional view
- 232: locally adjusted surface by pull-action
- 234: locally adjusted surface by push-action

- 300, 302: display content
- 310, 312: volume rendering of image data inside sub-volume
- 315: thin bone layer
- 320: volume rendering of image data outside sub-volume
- 330, 332: viewport comprising volume rendering
- 340: visualized outline of sub-volume

- 400, 402: pull-action
- 410: push-action
- 420, 422: push/pull point
- 430, 432: spatial extent of push/pull-action

- 500: method for volume rendering
- 510: accessing image data of image volume
- 520: applying segmentation model to identify sub-volume
- 530: volume rendering of image data of sub-volume
- 540: establishing user interface
- 550: updating volume rendering

- 600: computer-readable medium
- 610: non-transitory data

### DETAILED DESCRIPTION OF EMBODIMENTS

The following embodiments involve providing a user interface which enables a user to interactively adjust a sub-volume by applying at least one of: a push action and a pull action to the sub-volume. The push action may cause part of the sub-volume to be pulled inwards, whereas the pull action may cause part of the sub-volume to be pulled outwards. The volume rendering of the sub-volume may be updated in response to a user's adjustment of the sub-volume.

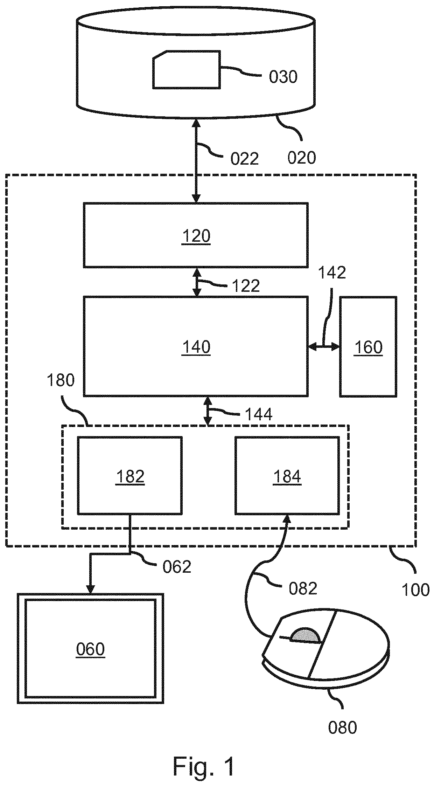

Fig. 1 shows a system 100 for volume rendering of image data of an image volume. The system 100 comprises an image data interface 120 configured to access the image data 030 of the image volume. In the example of Fig. 1, the image data interface 120 is shown to be connected to an external image repository 020 which comprises the image data 030 of the image volume. For example, the image repository 020 may be constituted by, or be part of, a Picture Archiving and Communication System (PACS) of a Hospital Information System (HIS) to which the system 100 may be connected or comprised in. Accordingly, the system 100 may obtain access to the image data 030 of the image volume via external data communication 022. Alternatively, the volumetric image data may be accessed from an internal data storage of the system. In general, the image data interface 120 may take various forms, such as a network interface to a local or wide area network, e.g., the Internet, a storage interface to an internal or external data storage, etc.

The system 100 is further shown to comprise a user interface subsystem 180 which may be configured to, during operation of the system 100, enable a user to interact with the system 100, for example using a graphical user interface. The user interface subsystem 180 is shown to comprise a user input interface 184 configured to receive user input data 082 from a user input device 080 operable by the user. The user input device 080 may take various forms, including but not limited to a computer mouse, touch screen, keyboard, microphone, etc. Fig. 1 shows the user input device to be a computer mouse 080. In general, the user input interface 184 may be of a type which corresponds to the type of user input device 080, i.e., it may be a thereto corresponding type of user device interface 184.

The user interface subsystem 180 is further shown to comprise a display output interface 182 configured to provide display data 062 to a display 060 to visualize output of the system 100. In the example of Fig. 1, the display is an external display 060. Alternatively, the display may be an internal display.

The system 100 is further shown to comprise a processor 140 configured to internally communicate with the image data interface 120 via data communication 122, and a memory 160 accessible by the processor 140 via data communication 142. The processor 140 is further shown to internally communicate with the user interface subsystem 180 via data communication 144.

The processor 140 may be configured to, during operation of the system 100, apply a segmentation model to the image data 030 of the image volume, thereby delineating a sub-volume of the image volume, generate the display data 062 to show a viewport which comprises a volume rendering of image data inside the sub-volume, and using the user input interface 184 and the display output interface 182, establish a user interface which enables the user to interactively adjust the sub-volume by applying at least one of: a push action and a pull action to the sub-volume, wherein the push action causes a part of the sub-volume to be pulled inwards, wherein the pull action causes the part of the sub-volume to be pulled outwards, and wherein the volume rendering of the sub-volume is updated in the viewport in response to an adjustment of the sub-volume by the user.

This operation of the system 100, and various optional aspects thereof, will be explained in more detail with reference to Figs. 2-6.

In some embodiments, the user interface established by the system 100 may be or comprise a graphical user interface which is shown on the display 060. For that purpose, the processor 140 may be configured to generate the display data 062 to display the graphical user interface to a user. The graphical user interface may be represented by a set of interface instructions stored as data in a memory accessible to the processor 140, being for example the memory 160 or another memory of the system 100. It is noted that, in other embodiments, the user interface established by the system 100 is not a graphical user interface. For example, the user may use a keyboard to provide input to the system 100, while the viewport may be shown on the display full-screen. Such a configuration of the system 100 may conventionally not be understood as a graphical user interface.

In general, the system 100 may be embodied as, or in, a single device or apparatus, such as a workstation or imaging apparatus or mobile device. The device or apparatus may comprise one or more microprocessors which execute appropriate software. The software may have been downloaded and/or stored in a corresponding memory, e.g., a volatile memory such as RAM or a non-volatile memory such as Flash. Alternatively, the functional units of the system, e.g., the image data interface, the user input interface, the display output interface and the processor, may be implemented in the device or apparatus in the form of programmable logic, e.g., as a Field-Programmable Gate Array (FPGA). In general, each functional unit of the system may be implemented in the form of a circuit. It is noted that the system 100 may also be implemented in a distributed manner, e.g., involving different devices or apparatuses. For example, the distribution may be in accordance with a client-server model, e.g., using a server and a thin-client.

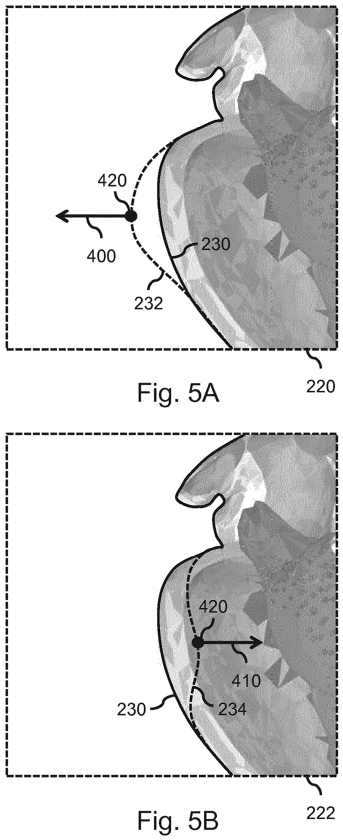

Fig. 2 schematically shows an image volume 200 by way of its outline, with a segmentation model 210 having been applied to the image data of the image volume 200 resulting in the delineation or segmentation of a sub-volume 210 in the image volume 200. In Fig. 2 and in Figs. 5A and 5B, the sub-volume 210 is shown to correspond to the volume occupied by the segmentation model 210, and is therefore referenced by a same reference numeral and visualized by the same.

Any known technique for model-based segmentation may be used to delineate a particular sub-volume, e.g., a 'sub-volume of interest'. The sub-volume may correspond to an anatomical region, such as an interior of the ribcage, an anatomical organ, such as the heart, or any other type of anatomical structure. The model-based segmentation may result in a set of points explicitly or implicitly defining a closed surface, e.g., a hull, which encompasses - and thereby delineates - a sub-volume of the image volume. An example of such model-based segmentation is described in *"*Automatic Model-based Segmentation of the Heart in CT Images" by Ecabert et al., IEEE Transactions on Medical Imaging 2008, 27(9), pp. 1189-1201.

It will be appreciated that, in general, a segmentation model may define more than an (outer) surface of an anatomical region or structure. For example, a segmentation model may delineate an exterior of an organ as well as internal structures inside of the organ. In such an example, the sub-volume may be delineated by the outer surface, e.g., a hull, of the segmentation model. However, the segmentation model may also directly and solely define such an outer surface.

Fig. 3 shows an example of a volume rendering 310 of the image data inside a sub-volume. It is noted that the sub-volume here corresponds to an interior of the ribcage, and is thus different from the sub-volume of Fig. 2 which solely delineates the heart. In Fig. 3, image data outside the image volume is not shown, e.g., by having been excluded from input to the volume rendering technique or having been assigned a 100% opacity. As also shown in Fig. 3, it may be possible that the rendered sub-volume 310 comprises undesired (parts) of a structure. For example, in the case of Fig. 3, the sub-volume includes a thin bone layer 315, thereby causing part of the heart to be obstructed in the volume rendering 310. This may be due to small, possibly sub-mm, deviations in the model-based segmentation. Also larger errors may occur during segmentation. For example, a structure may have been wrongly excluded from the segmentation, such as an aorta that has been interpreted as the spine due to a limited field of view of the segmentation algorithm. In this case, the volume rendering may lack a structure which may be of interest to a user. In these and similar cases, it may be desired to adjust the sub-volume.

It will be appreciated that such adjustment may also be desirable in case the segmentation is correct. For example, it may be that the segmentation model does not fully represent the anatomical region or structure of interest, and thus that a 'correction' of an - in principle correct - segmentation is desired.

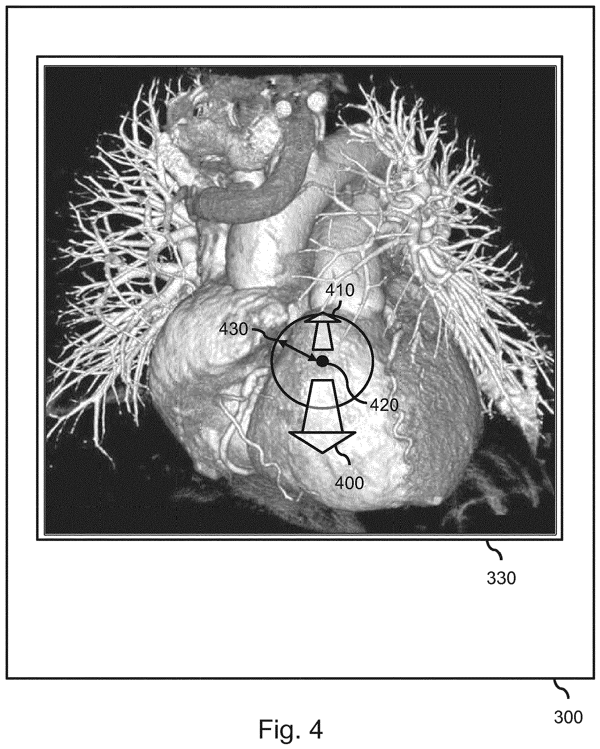

Fig. 4 shows a viewport 330 which may be shown on a display as part of display content 300. The system 100 of Fig. 1 may generate such display content, with the display content being provided to the display in the form of display data. Although not shown in Fig. 4, the display content 300 may comprise other content besides the viewport 330, including but not limited to buttons, menus, etc. of a graphical user interface. In some embodiments, the display content may entirely consist of the viewport 330, in which case the viewport 330 is shown full-screen.

The viewport 330 is shown to comprise a rendered sub-volume similar to the one shown in Fig. 3. The user may use the viewport 330 to navigate within the image volume and obtain volume renderings from different perspectives of the sub-volume. Such navigation may be on the basis of the user providing navigation commands to the system 100 of Fig. 1. These navigation commands may be translated by the system 100 into adjustments of the geometry of a viewing plane of the volume rendering, for example by adjusting a position or orientation of the viewing plane within the image volume. Such type of navigation is known per se.

In addition, the adjustment tools provided by system 100 of Fig. 1 are schematically illustrated. Namely, it is illustrated that the user may, when presented with the viewport 330, select a push action which causes a part of the sub-volume to be pushed inwards, which is illustrated in Fig. 4 with arrow 410. Similarly, the user may select a pull action which causes a part of the sub-volume to be pulled outwards, which is illustrated in Fig. 4 with arrow 400. In the example of Fig. 4, both push action and pull action cause a deformation orthogonally to the viewing plane, in that the pull action pulls the part of the sub-volume towards the user, and the push action pushes the part of the sub-volume away of the user.

The direction of the push action and the pull action may be determined in various ways. For example, specific adjustment modes may be provided, in which the push action and the pull action operate in a certain plane. For example, as indicated in Fig. 4, a frontal adjustment mode may be provided in which the pull action 400 and the push action 410 operate in a plane orthogonal to the viewing plane of the volume rendering 310, e.g., towards and away from the user. Another example is that the direction of the adjustment may be dependent on the spatial orientation of the part of the sub-volume which is to be adjusted. For example, the direction of adjustment may always be perpendicular to its surface. Yet another example is that the type of input command which is used to select and active the push/pull action may determine in which direction the push/pull action is carried out.

In general, the part of the sub-volume to which the push action 410 or the pull action 400 is applied may be selected to be centered around or otherwise positioned relative to a point 420 of the sub-volume. For example, the point 420 may be selected by the system, e.g., as the point of the sub-volume which is shown in a center of viewport 330, or the point of the sub-volume which is closest to the viewing plane of the volume rendering. It will be appreciated that in such examples, the user may indirectly influence the selection of the point, e.g., by rotating or moving the rendered sub-volume if the system provides such functionality. Alternatively or additionally, the user may manually select the point 420, e.g., via a cursor.

The user interface provided by the system may further enable the user to select a spatial extent 430 and/or a strength of the push action 410 or the pull action 400. This spatial extent, which is shown in Fig. 4 as a circle 430 defined by a spatial radius but which may also have any other shape, may define the size of the area on the surface of the sub-volume which is influenced by the push/pull operation. For example, an area may be selected based on the geodesic distance on the surface to the point 420, e.g., as a distance on the surface of a mesh representing the segmentation model, or an area that is given by the intersection of a sphere with the given spatial radius around the point with the sub-volume. The spatial radius, or in general the spatial extent, may have a default value. Similarly, a strength may be selected which defines how far the surface of the sub-volume is deformed by a push/pull action. The strength may be user-defined value or a default value.

It will be appreciated that the push action and the pull action may be selected and activated in various ways. In some embodiments, the selection and activation may be the same. For example, the push/pull action may be selected and activated by a keyboard command or by mouse interaction, such as scrolling the wheel or dragging the mouse, whereby the inward ('push') or outward direction ('pull') may be determined based on the direction of the mouse interaction. The selection of the push/pull action may also take place in a graphical user interface, e.g., by selection from a menu, with the activation being, e.g., a mouse click.

Fig. 5A and 5B both illustrate, in cross-sectional views 220, 222 of the segmentation model, how the adjustment by a push/pull action locally deforms the segmentation model. It is noted that these Figures are provided for illustration purposes and do not represent the manner in which the adjustment is carried out by the user. Fig. 5A illustrates the pull action 400, where it can be seen that the surface 230 of the segmentation model (and thereby the sub-volume) is locally deformed outwards around point 420 by the pull action 400, resulting in a locally adjusted surface 232. Fig. 5B illustrates the push action 410, where it can be seen that the surface 230 is locally deformed inwards around point 420 by the push action 410, thereby resulting in a locally adjusted surface 234.

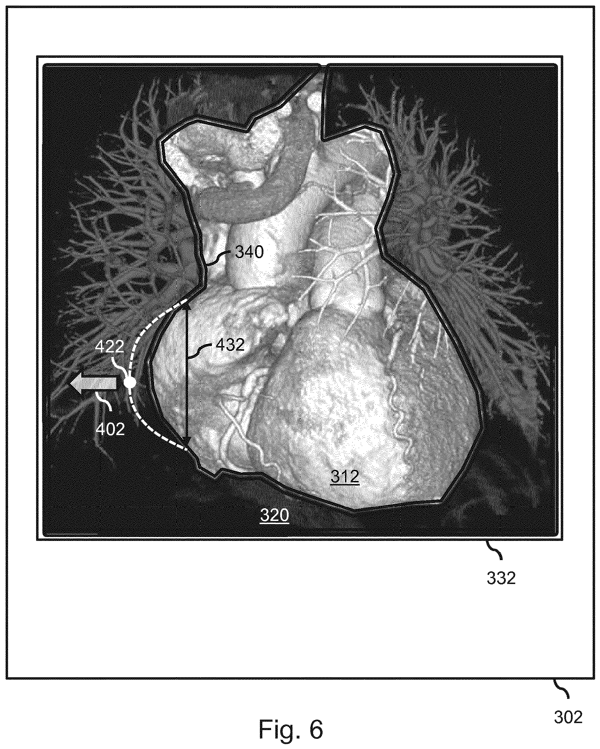

Fig. 6 shows viewport 332 which may be shown on a display as part of display content 302, while further illustrating a side adjustment mode. In such a side adjustment mode, the pull action 402 and the push action (not explicitly shown in Fig. 6) operate in a plane parallel to the viewing plane of the volume rendering 312. Fig. 6 further illustrates the point 422 around which the pull action 402 is performed, and the spatial extent 432 of the pull action. To aid the user in the adjustment of the sub-volume, an outline 340 of a lateral side of the sub-volume may be visualized in the viewport. The outline 340 may be a line, or a lateral part of the surface of the sub-volume may be rendered in a semi-transparent manner. In some embodiments, the outline 340 may be 'dragged-and-dropped' to effect the push/pull action.

Additionally or alternatively, image data surrounding the sub-volume in the image volume may also be volume rendered (reference numeral 320 in Fig. 6), but displayed in the viewport 322 in accordance with a different visualization parameter than the image data inside of the sub-volume. For example, the volume rendering 320 of the image data surrounding the sub-volume may be displayed with a higher opacity or lower intensity. Fig. 6 shows the latter type of visualization.

In general, after each push/pull action, the sub-volume may be rerendered in the viewport. In some embodiments, the sub-volume may be rerendered while a push/pull action is performed, e.g., already before its completion.

In some embodiments, the adjusted segmentation model may be saved after the interactive adjustment. In some embodiments, the adjustment steps may be stored, and the user interface may provide redo and repeat operations.

It will appreciated that adjustment of a segmentation model or surface representing a sub-volume is known per se. It is therefore within reach of the skilled person to cause a segmentation model to be deformed by a local pull inwards or a local pull outwards in the manner as described in this specification. For example, if the segmentation model is a mesh model, mesh deformation techniques may be used as known per se from the field of computer graphics or mesh modelling.

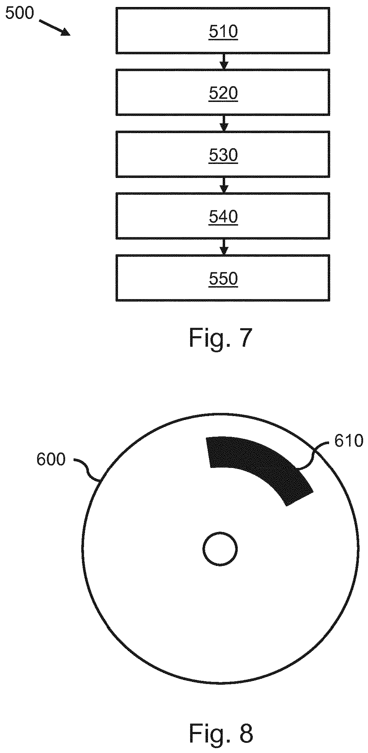

Fig. 7 shows a computer-implemented method 500 for volume rendering of image data of an image volume. It is noted that the method 500 may, but does not need to, correspond to an operation of the system 100 as described with reference to Fig. 1 and others.

The method 500 comprises, in an operation titled "ACCESSING IMAGE DATA OF IMAGE VOLUME", accessing 510 the image data of the image volume. The method 500 further comprises, in an operation titled "APPLYING SEGMENTATION MODEL TO IDENTIFY SUB-VOLUME", applying 520 a segmentation model to the image data of the image volume, thereby delineating a sub-volume of the image volume. The method 500 further comprises, in an operation titled "VOLUME RENDERING OF IMAGE DATA OF SUB-VOLUME", generating 530 display data showing a viewport which comprises a volume rendering of image data inside the sub-volume. The method 500 further comprises, in an operation titled "ESTABLISHING USER INTERFACE", establishing 540 a user interface which enables the user to interactively adjust the sub-volume by applying at least one of: a push action and a pull action to the sub-volume, wherein the push action causes a part of the sub-volume to be pulled inwards, and wherein the pull action causes the part of the sub-volume to be pulled outwards. The method 500 further comprises, in an operation titled "UPDATING VOLUME RENDERING", updating 550 the volume rendering of the sub-volume in the viewport in response to an adjustment of the sub-volume by the user. It will be appreciated that the above operation may be performed in any suitable order, e.g., consecutively, simultaneously, or a combination thereof, subject to, where applicable, a particular order being necessitated, e.g., by input/output relations.

The method 500 may be implemented on a computer as a computer implemented method, as dedicated hardware, or as a combination of both. As also illustrated in Fig. 8, instructions for the computer, e.g., executable code, may be stored on a computer readable medium 600, e.g., in the form of a series 610 of machine readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 8 shows an optical disc 600.

In accordance with an abstract of the present application, a system and method may be provided for volume rendering of image data of an image volume. A segmentation model may be applied to the image data of the image volume, thereby delineating a sub-volume of the image volume. The image data inside the sub-volume may be volume rendered. A user interface may be provided which enables a user to interactively adjust the sub-volume by applying at least one of: a push action and a pull action to the sub-volume. The push action may cause part of the sub-volume to be pulled inwards, whereas the pull action may cause part of the sub-volume to be pulled outwards. The volume rendering of the sub-volume may be updated in response to a user's adjustment of the sub-volume

Examples, embodiments or optional features, whether indicated as non-limiting or not, are not to be understood as limiting the invention as claimed.

It will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (100) for volume rendering of image data of an image volume (200) showing a type of anatomical structure, the system comprising:
- an image data interface (120) configured to access the image data (030) of the image volume;
- a user input interface (184) configured to receive user input data (082) from a user input device (080) operable by a user;
- a display output interface (182) configured to provide display data (062) to a display (060) to visualize output of the system;
- a memory (160) comprising instruction data representing a set of instructions;
- a processor (140) configured to communicate with the image data interface, the user input interface, the display output interface and the memory and to execute the set of instructions, wherein the set of instructions, when executed by the processor, cause the processor to:
- access model data defining a segmentation model for segmenting the type of anatomical structure;
- apply the segmentation model to the image data of the image volume (200), thereby delineating a sub-volume (210) of the image volume representing a segmentation of the anatomical structure in the image volume;
- generate the display data to show a viewport (330, 332) which comprises a volume rendering (310, 312) of image data inside the sub-volume onto a viewing plane;
- using the user input interface and the display output interface, establish a user interface which enables the user to:
interactively adjust a geometry of the viewing plane of the volume rendering to establish a user-selected viewing plane;
interactively adjust the sub-volume by applying at least one of: a push action (410) and a pull action (400, 402) to the sub-volume, wherein the push action causes a part of the sub-volume to be pulled inwards, wherein the pull action causes the part of the sub-volume to be pulled outwards, wherein the part of the sub-volume to which the push action or the pull action is applied is selected by the processor based on the geometry of the user-selected viewing plane,
wherein the volume rendering of the sub-volume is updated in the viewport in response to an adjustment of the viewing plane or the sub-volume by the user.

2. The system (100) according to claim 1, wherein the push action (410) or the pull action (400, 402) is selected and applied by the user based on at least one of: a keyboard command and a predefined mouse interaction.

3. The system (100) according to claim 1 or 2, wherein the part of the sub-volume (210) to which the push action (410) or the pull action (400, 402) is applied is selected by the processor based on at least one of:
- a point (420, 422) of the sub-volume which is shown in a center of viewport,
- a point of the sub-volume which is closest to the user-selected viewing plane of the volume rendering.

4. The system according to any one of claims 1 to 3, wherein the user interface comprises a manual selection mode in which the part of the sub-volume (210) to which the push action (410) or the pull action (400, 402) is applied is selected by the processor based on a user selection of a point of the sub-volume.

5. The system (100) according to any one of claims 1 to 4, wherein the user interface enables the user to select at least one of: a spatial extent (430, 432) and a strength, of the push action (410) or the pull action (400, 402).

6. The system (100) according to any one of claims 1 to 5, wherein the user interface comprises a side adjustment mode in which the pull action (402) and the push action operate in a plane parallel to the user-selected viewing plane of the volume rendering (312), and wherein, when the side adjustment mode is selected, an outline (340) of a lateral side of the sub-volume is visualized in the viewport (332).

7. The system (100) according to claim 6, wherein, when the side adjustment mode is selected, image data surrounding the sub-volume (210) in the image volume (200) is volume rendered (320) and displayed in the viewport (322) in accordance with a different visualization parameter than the image data inside of the sub-volume.

8. The system (100) according to claim 7, wherein the different visualization parameter causes the volume rendering (320) of the image data surrounding the sub-volume (210) to be displayed with a higher opacity or lower intensity.

9. The system (100) according to any one of claims 1 to 8, wherein the user interface comprises a frontal adjustment mode in which the pull action (400) and the push action (410) operate in a plane orthogonal to the user-selected viewing plane of the volume rendering (310, 312).

10. The system (100) according to claim 9, wherein, when the frontal adjustment mode is selected, image data surrounding the sub-volume (210) in the image volume (200) is excluded from the volume rendering (310, 312) or assigned a 100% opacity in the volume rendering.

11. The system (100) according to any one of claims 1 to 10, wherein the segmentation model is a mesh model.

12. The system (100) according to any one of claims 1 to 11, wherein the segmentation model defines a closed hull.

13. A workstation or imaging apparatus comprising the system (100) according to any one of claims 1 to 12.

14. A computer-implemented method (500) for volume rendering of image data of an image volume showing a type of anatomical structure, the method comprising:
- accessing (510) the image data of the image volume;
- accessing model data defining a segmentation model for segmenting the type of anatomical structure;
- applying (520) the segmentation model to the image data of the image volume, thereby delineating a sub-volume of the image volume representing a segmentation of the anatomical structure in the image volume;
- generating (530) display data showing a viewport which comprises a volume rendering of image data inside the sub-volume onto a viewing plane;
- establishing (540) a user interface which enables the user to:
interactively adjust a geometry of the viewing plane of the volume rendering to establish a user-selected viewing plane;
interactively adjust the sub-volume by applying at least one of: a push action and a pull action to the sub-volume, wherein the push action causes a part of the sub-volume to be pulled inwards, and wherein the pull action causes the part of the sub-volume to be pulled outwards, wherein the part of the sub-volume to which the push action or the pull action is applied is selected by the processor based on the geometry of the user-selected viewing plane; and
- updating (550) the volume rendering of the sub-volume in the viewport in response to an adjustment of the viewing plane or the sub-volume by the user.

15. A computer-readable medium (600) comprising transitory or non-transitory data (610) representing instructions arranged to cause a processor system to perform the computer-implemented method according to claim 14.

## Patentansprüche

1. System (100) zum Volumenrendering von Bilddaten eines Bildvolumens (200), das einen Typ einer anatomischen Struktur zeigt, wobei das System umfasst:
- eine Bilddatenschnittstelle (120), die konfiguriert ist, um auf die Bilddaten (030) des Bildvolumens zuzugreifen;
- eine Benutzereingabeschnittstelle (184), die konfiguriert ist, um Benutzereingabedaten (082) von einer Benutzereingabevorrichtung (080), die von einem Benutzer bedient werden kann, zu empfangen;
- eine Anzeigeausgabeschnittstelle (182), die konfiguriert ist, um Anzeigedaten (062) für eine Anzeige (060) bereitzustellen, um eine Ausgabe des Systems darzustellen;
- einen Speicher (160), der Anweisungsdaten umfasst, die einen Satz Anweisungen repräsentieren;
- einen Prozessor (140), der konfiguriert ist, um mit der Bilddatenschnittstelle, der Benutzereingabeschnittstelle, der Anzeigeausgabeschnittstelle und dem Speicher zu kommunizieren und den Satz Anweisungen auszuführen, wobei der Satz Anweisungen, wenn er vom Prozessor ausgeführt wird, bewirkt, dass der Prozessor:
- auf Modelldaten zugreift, die ein Segmentierungsmodell zum Segmentieren des Typs einer anatomischen Struktur definieren;
- das Segmentierungsmodell auf die Bilddaten des Bildvolumens (200) anwendet, wodurch ein Teilvolumen (210) des Bildvolumens, das eine Segmentierung der anatomischen Struktur im Bildvolumen repräsentiert, abgegrenzt wird;
- die Anzeigedaten erzeugt, um ein Ansichtsfenster (330, 332) anzuzeigen, das ein Volumenrendering (310, 312) von Bilddaten innerhalb des Teilvolumens auf einer Ansichtsebene umfasst;
- unter Verwendung der Benutzereingabeschnittstelle und der Anzeigeausgabeschnittstelle eine Benutzerschnittstelle erstellt, die es dem Benutzer ermöglicht:
eine Geometrie der Ansichtsebene des Volumenrenderings interaktiv anzupassen, um eine vom Benutzer ausgewählte Ansichtsebene zu erstellen;
das Teilvolumen interaktiv anzupassen durch Anwenden mindestens eines von: einer Schiebeaktion (410) und einer Ziehaktion (400, 402) auf das Teilvolumen, wobei die Schiebeaktion bewirkt, dass ein Teil des Teilvolumens nach innen gezogen wird, wobei die Ziehaktion bewirkt, dass der Teil des Teilvolumens nach außen gezogen wird, wobei der Teil des Teilvolumens, auf den die Schiebeaktion oder die Ziehaktion angewendet wird, vom Prozessor auf Basis der Geometrie der vom Benutzer ausgewählten Ansichtsebene ausgewählt wird,
wobei das Volumenrendering des Teilvolumens im Ansichtsfenster in Reaktion auf eine Anpassung der Ansichtsebene oder des Teilvolumens durch den Benutzer aktualisiert wird.

2. System (100) nach Anspruch 1, wobei die Schiebeaktion (410) oder die Ziehaktion (400, 402) vom Benutzer auf Basis mindestens eines ausgewählt und angewendet wird von: einem Tastaturbefehl und einer vordefinierten Mausinteraktion.

3. System (100) nach Anspruch 1 oder 2, wobei der Teil des Teilvolumens (210), auf den die Schiebeaktion (410) oder die Ziehaktion (400, 402) angewendet wird, vom Prozessor auf Basis mindestens eines ausgewählt wird von:
- einem Punkt (420, 422) des Teilvolumens, der in einer Mitte des Ansichtsfensters angezeigt wird,
- einem Punkt des Teilvolumens, der der vom Benutzer ausgewählten Ansichtsebene des Volumenrenderings am nächsten liegt.

4. System nach einem der Ansprüche 1 bis 3, wobei die Benutzerschnittstelle einen manuellen Auswahlmodus umfasst, in dem der Teil des Teilvolumens (210), auf den die Schiebeaktion (410) oder die Ziehaktion (400, 402) angewendet wird, vom Prozessor auf Basis einer Benutzerauswahl eines Punkts des Teilvolumens ausgewählt wird.

5. System (100) nach einem der Ansprüche 1 bis 4, wobei die Benutzerschnittstelle es dem Benutzer ermöglicht, mindestens eines auszuwählen von: einer räumlichen Erstreckung (430, 432) und eine Stärke der Schiebeaktion (410) oder der Ziehaktion (400, 402).

6. System (100) nach einem der Ansprüche 1 bis 5, wobei die Benutzerschnittstelle einen Seitenanpassungsmodus umfasst, in dem die Ziehaktion (402) und die Schiebeaktion in einer Ebene parallel zu der vom Benutzer ausgewählten Ansichtsebene des Volumenrenderings (312) erfolgen, und wobei, wenn der Seitenanpassungsmodus ausgewählt ist, ein Umriss (340) einer seitlichen Seite des Teilvolumens im Ansichtsfenster (332) dargestellt wird.

7. System (100) nach Anspruch 6, wobei, wenn der Seitenanpassungsmodus ausgewählt ist, Bilddaten, die das Teilvolumen (210) im Bildvolumen (200) umgeben, ein Volumen sind, das mit einem anderen Darstellungsparameter als die Bilddaten innerhalb des Teilvolumens gerendert (320) und im Ansichtsfenster (322) angezeigt wird.

8. System (100) nach Anspruch 7, wobei der andere Darstellungsparameter bewirkt, dass das Volumenrendering (320) der Bilddaten, die das Teilvolumen (210) umgeben, mit einer höheren Opazität oder niedrigeren Intensität angezeigt wird.

9. System (100) nach einem der Ansprüche 1 bis 8, wobei die Benutzerschnittstelle einen Frontalanpassungsmodus umfasst, in dem die Ziehaktion (400) und die Schiebeaktion (410) in einer Ebene orthogonal zu der vom Benutzer ausgewählten Ansichtsebene des Volumenrenderings (310, 312) erfolgen.

10. System (100) nach Anspruch 9, wobei, wenn der Frontalanpassungsmodus ausgewählt ist, Bilddaten, die das Teilvolumen (210) im Bildvolumen (200) umgeben, vom Volumenrendering (310, 312) ausgeschlossen werden oder beim Volumenrendering eine Opazität von 100 % zugewiesen bekommen.

11. System (100) nach einem der Ansprüche 1 bis 10, wobei das Segmentierungsmodell ein Maschenmodell ist.

12. System (100) nach einem der Ansprüche 1 bis 11, wobei das Segmentierungsmodell eine geschlossene Hülle definiert.

13. Arbeitsstation oder Bildgebungseinrichtung, die das System (100) nach einem der Ansprüche 1 bis 12 umfasst.

14. Computerimplementiertes Verfahren (500) zum Volumenrendering von Bilddaten eines Bildvolumens, das einen Typ einer anatomischen Struktur zeigt, wobei das Verfahren umfasst:
- Zugreifen (510) auf die Bilddaten des Bildvolumens;
- Zugreifen auf Modelldaten, die ein Segmentierungsmodell zum Segmentieren des Typs einer anatomischen Struktur definieren;
- Anwenden (520) des Segmentierungsmodells auf die Bilddaten des Bildvolumens, wodurch ein Teilvolumen des Bildvolumens, das eine Segmentierung der anatomischen Struktur im Bildvolumen repräsentiert, abgegrenzt wird;
- Erzeugen (530) von Anzeigedaten, die ein Ansichtsfenster zeigen, das ein Volumenrendering von Bilddaten innerhalb des Teilvolumens auf einer Anzeigeebene umfasst;
- Erstellen (540) einer Benutzerschnittstelle, die es dem Benutzer ermöglicht:
eine Geometrie der Ansichtsebene des Volumenrenderings interaktiv anzupassen, um eine vom Benutzer ausgewählte Ansichtsebene zu erstellen;
das Teilvolumen interaktiv anzupassen durch Anwenden mindestens eines von: einer Schiebeaktion und einer Ziehaktion auf das Teilvolumen, wobei die Schiebeaktion bewirkt, dass ein Teil des Teilvolumens nach innen gezogen wird, und wobei die Ziehaktion bewirkt, dass der Teil des Teilvolumens nach außen gezogen wird, wobei der Teil des Teilvolumens, auf den die Schiebeaktion oder die Ziehaktion angewendet wird, vom Prozessor auf Basis der Geometrie der vom Benutzer ausgewählten Ansichtsebene ausgewählt wird; und
- Aktualisieren (550) des Volumenrenderings des Teilvolumens im Ansichtsfenster in Reaktion auf eine Anpassung der Ansichtsebene oder des Teilvolumens durch den Benutzer.

15. Computerlesbares Medium (600), das flüchtige oder nichtflüchtige Daten (610) umfasst, die Anweisungen repräsentieren, die dazu eingerichtet sind, zu bewirken, dass ein Prozessorsystem das computerimplementierte Verfahren nach Anspruch 14 durchführt.

## Revendications

1. Système (100) de rendu de volume de données d'image d'un volume d'image (200) montrant un type de structure anatomique, le système comprenant :
- une interface de données d'image (120) configurée pour accéder aux données d'image (030) du volume d'image ;
- une interface d'entrée utilisateur (184) configurée pour recevoir des données d'entrée utilisateur (082) d'un dispositif d'entrée utilisateur (080) utilisable par un utilisateur ;
- une interface de sortie d'affichage (182) configurée pour fournir des données d'affichage (062) à un affichage (060) pour visualiser la sortie du système ;
- une mémoire (160) comprenant des données d'instruction représentant un ensemble d'instructions ;
- un processeur (140) configuré pour communiquer avec l'interface de données d'image, l'interface d'entrée utilisateur, l'interface de sortie d'affichage et la mémoire et pour exécuter l'ensemble d'instructions, dans lequel l'ensemble d'instructions, lorsqu'il est exécuté par le processeur, amène le processeur à :
- accéder à des données de modèle définissant un modèle de segmentation pour segmenter le type de structure anatomique ;
- appliquer le modèle de segmentation aux données d'image du volume d'image (200), délimitant ainsi un sous-volume (210) du volume d'image représentant une segmentation de la structure anatomique dans le volume d'image ;
- générer les données d'affichage pour montrer une fenêtre de visualisation (330, 332) qui comprend un rendu de volume (310, 312) de données d'image à l'intérieur du sous-volume sur un plan de visualisation ;
- en utilisant l'interface d'entrée utilisateur et l'interface de sortie d'affichage, établir une interface utilisateur qui permet à l'utilisateur de :
ajuster de manière interactive la géométrie du plan de visualisation du rendu de volume pour établir un plan de visualisation sélectionné par l'utilisateur ;
ajuster de manière interactive le sous-volume en appliquant au moins une parmi : une action de poussée (410) et une action de traction (400, 402) au sous-volume, dans lequel l'action de poussée amène une partie du sous-volume à être tirée vers l'intérieur, dans lequel l'action de traction amène la partie du sous-volume à être tirée vers l'extérieur, dans lequel la partie du sous-volume à laquelle l'action de poussée ou l'action de traction est appliquée est sélectionnée par le processeur sur la base de la géométrie du plan de visualisation sélectionné par l'utilisateur,
dans lequel le rendu de volume du sous-volume est mis à jour dans la fenêtre de visualisation en réponse à un ajustement du plan de visualisation ou du sous-volume par l'utilisateur.

2. Système (100) selon la revendication 1, dans lequel l'action de poussée (410) ou l'action de traction (400, 402) est sélectionnée et appliquée par l'utilisateur sur la base d'au moins une parmi : une commande de clavier et une interaction de souris prédéfinie.

3. Système (100) selon la revendication 1 ou 2, dans lequel la partie du sous-volume (210) à laquelle l'action de poussée (410) ou l'action de traction (400, 402) est appliquée est sélectionnée par le processeur sur la base d'au moins un parmi :
- un point (420, 422) du sous-volume qui est montré au centre de la fenêtre de visualisation,
- un point du sous-volume qui est le plus proche du plan de visualisation sélectionné par l'utilisateur pour le rendu de volume.

4. Système selon l'une quelconque des revendications 1 à 3, dans lequel l'interface utilisateur comprend un mode de sélection manuelle dans lequel la partie du sous-volume (210) à laquelle l'action de poussée (410) ou l'action de traction (400, 402) est appliquée est sélectionnée par le processeur sur la base de la sélection par l'utilisateur d'un point du sous-volume.

5. Système (100) selon l'une quelconque des revendications 1 à 4, dans lequel l'interface utilisateur permet à l'utilisateur de sélectionner au moins une parmi : une étendue spatiale (430, 432) et une force de l'action de poussée (410) ou de l'action de traction (400, 402).

6. Système (100) selon l'une quelconque des revendications 1 à 5, dans lequel l'interface utilisateur comprend un mode d'ajustement latéral dans lequel l'action de traction (402) et l'action de poussée fonctionnent dans un plan parallèle au plan de visualisation sélectionné par l'utilisateur pour le rendu de volume (312), et dans lequel, lorsque le mode d'ajustement latéral est sélectionné, un contour (340) d'un côté latéral du sous-volume est visualisé dans la fenêtre de visualisation (332).

7. Système (100) selon la revendication 6, dans lequel, lorsque le mode d'ajustement latéral est sélectionné, des données d'image entourant le sous-volume (210) dans le volume d'image (200) sont rendues en volume (320) et affichées dans la fenêtre de visualisation (322) conformément à un paramètre de visualisation différent des données d'image à l'intérieur du sous-volume.

8. Système (100) selon la revendication 7, dans lequel le paramètre de visualisation différent amène le rendu de volume (320) des données d'image entourant le sous-volume (210) à être affiché avec une opacité supérieure ou une intensité inférieure.

9. Système (100) selon l'une quelconque des revendications 1 à 8, dans lequel l'interface utilisateur comprend un mode d'ajustement frontal dans lequel l'action de traction (400) et l'action de poussée (410) fonctionnent dans un plan orthogonal au plan de visualisation sélectionné par l'utilisateur du rendu de volume (310, 312).

10. Système (100) selon la revendication 9, dans lequel, lorsque le mode d'ajustement frontal est sélectionné, des données d'image entourant le sous-volume (210) dans le volume d'image (200) sont exclues du rendu de volume (310, 312) ou se voient assigner une opacité de 100 % dans le rendu de volume.

11. Système (100) selon l'une quelconque des revendications 1 à 10, dans lequel le modèle de segmentation est un modèle de maillage.

12. Système (100) selon l'une quelconque des revendications 1 à 11, dans lequel le modèle de segmentation définit une coque fermée.

13. Station de travail ou appareil d'imagerie comprenant le système (100) selon l'une quelconque des revendications 1 à 12.

14. Procédé mis en œuvre par ordinateur (500) pour le rendu de volume de données d'image d'un volume d'image montrant un type de structure anatomique, le procédé comprenant :
- l'accès (510) aux données d'image du volume d'image ;
- l'accès à des données de modèle définissant un modèle de segmentation pour segmenter le type de structure anatomique ;
- l'application (520) du modèle de segmentation aux données d'image du volume d'image, délimitant ainsi un sous-volume du volume d'image représentant une segmentation de la structure anatomique dans le volume d'image ;
- la génération (530) de données d'affichage montrant une fenêtre de visualisation qui comprend un rendu de volume de données d'image à l'intérieur du sous-volume sur un plan de visualisation ;
- l'établissement (540) d'une interface utilisateur qui permet à l'utilisateur de :
ajuster de manière interactive la géométrie du plan de visualisation du rendu de volume pour établir un plan de visualisation sélectionné par l'utilisateur ;
ajuster de manière interactive le sous-volume en appliquant au moins une parmi : une action de poussée et une action de traction au sous-volume, dans lequel l'action de poussée amène une partie du sous-volume à être tirée vers l'intérieur, et dans lequel l'action de traction amène la partie du sous-volume à être tirée vers l'extérieur, dans lequel la partie du sous-volume à laquelle l'action de poussée ou l'action de traction est appliquée est sélectionnée par le processeur sur la base de la géométrie du plan de visualisation sélectionné par l'utilisateur ; et
- la mise à jour (550) du rendu de volume du sous-volume dans la fenêtre de visualisation en réponse à un ajustement du plan de visualisation ou du sous-volume par l'utilisateur.

15. Support lisible par ordinateur (600) comprenant des données transitoires ou non transitoires (610) représentant des instructions conçues pour amener un système de processeur à réaliser le procédé mis en œuvre par ordinateur selon la revendication 14.
